# EUROPÄISCHE PATENTSCHRIFT

(11) **EP 2 210 334 B1**
(45) Veröffentlichungstag und Bekanntmachung des Hinweises auf die Patenterteilung: **13.03.2013**
(21) Anmeldenummer: 08850628.2
(22) Anmeldetag: 12.11.2008
(51) Int. Cl.: H02K 21/02, H02K 21/22, H02K 1/27, H02K 1/22

(54) **PERMANENT ERREGTE ELEKTRISCHE MASCHINE**
PERMANENTLY EXCITED ELECTRICAL MACHINE
MACHINE ÉLECTRIQUE À EXCITATION PERMANENTE

(30) Priorität: 15.11.2007 DE 102007056116
(43) Veröffentlichungstag der Anmeldung: 28.07.2010
(60) Teilanmeldung: 12000114.4
(73) Patentinhaber: Compact Dynamics GmbH, 82319 Starnberg (DE)
(72) Erfinder: GRUENDL, Andreas, 82319 Starnberg (DE); HOFFMANN, Bernhard, 82319 Starnberg (DE)
(74) Vertreter: Schmidt, Steffen
(86) Internationale Anmeldenummer: PCT/EP2008/009546
(87) Internationale Veröffentlichungsnummer: WO 2009/062688

(56) Entgegenhaltungen:
- EP-A- 0 942 517
- WO-A-03/021763
- CH-A- 436 451
- DE-A1- 4 001 042
- US-A1- 2002 145 360
- US-A1- 2006 091 752
- US-A1- 2006 186 754
- US-A1- 2006 208 602

## Beschreibung

### Hintergrund

Nachstehend ist eine permanent erregte elektrische Maschine beschrieben. Insbesondere geht es um eine Transversalflussmaschine mit einem Ständer und einem Läufer, wobei jeweils entweder der Ständer eine Ständerspule aufweist und der Läufer mit Permanentmagnet-Elementen versehen ist, oder der Läufer eine Läuferspule aufweist und der Ständer mit Permanentmagnet-Elementen versehen ist.

### Begriffsdefinitionen

Unter dem Begriff "Elektrische Maschine" werden hier sowohl Motoren als auch Generatoren verstanden, die als rund laufende Maschinen oder zum Beispiel als Linearmotoren ausgestaltet sein können. Außerdem ist dieses Konzept im Zusammenhang mit rund laufenden Maschinen sowohl bei Innenläufermaschinen als auch bei Außenläufermaschinen einsetzbar.

### Stand der Technik

Aus der EP 0 952 657 A2 ist eine Transversalflussmaschine mit einer Ständeranordnung in einem Ständergehäuse bekannt, in dem ein sich in Umlaufrichtung erstreckendes Polsystem mit U-förmigem Querschnitt angeordnet ist. In der Ausnehmung zwischen den Schenkeln des U-förmigen Querschnitts ist eine sich in Umlaufrichtung erstreckende Ringwicklung aufgenommen. Eine Läuferanordnung hat Reihen von abwechselnd angeordneten Permanentmagneten und Weicheisen-Rückflusselementen. Ständerseitig ist jeweils zwischen der Ringwicklung und der Läuferanordnung ein Tragring vorgesehen, der an beiden Randbereichen Ausnehmungen zur Aufnahme von in Richtung der Läuferanordnung vorstehenden Zähnen des Polsystems aufweist. Der Tragring dient zur Stabilisierung des Polsystems und der Ringspule. Jedes Polsystem besteht aus einem ringförmigen Poljoch und zwei in dessen seitlichen Bereichen daran anschließenden Polringen.

Die DE 195 47 159 A1 zeigt eine Transversalflussmaschine mit Leiterringen, die von U-förmigen, weichmagnetischen Körpern von drei Seiten umschlossen sind, wobei ein magnetischer Kreis von weich und/oder hartmagnetischen Teilen periodisch geschlossen wird. Diese Teile sind durch zwei, radial außerhalb der Leiterringe angeordnete Luftspalte vom jeweiligen U-förmigen, weichmagnetischen Körper getrennt. Die magnetisch aktiven Teile des Läufers oder Ständers sind teilweise axial innerhalb der Enden der U-förmigen weichmagnetischen Körper angeordnet.

Die DE 20 2005 019 162 zeigt einen Motor mit einem ringförmigen Ferromagnet, der einen nichtmagnetischen Außenbereich und einen magnetischen Innenbereich aufweist. Diese Anordnung hat insbesondere einen zum Zentrum hin orientierten ringförmigen anisotropen Multipoldauermagnet, wobei dessen Polzahl umgekehrt proportional zur Drehzahl steht. Der anisotrope Multipoldauermagnet hat einen nichtmagnetischen Außenbereich und einen magnetischen Innenbereich. Dabei werden die Magnetkraftlinien des magnetischen Innenberelches durch den nichtmagnetischen Außenbereich behindert, so dass die Magnetkreise verkleinert werden und der magnetische Fluss somit erhöht wird. Dadurch werden die Magnetkreise verkleinert und der magnetische Fluss somit erhöht, so dass die Leistung des Motors gesteigert wird. Bei herkömmlichen Magneten aus NdFeB oder halbmondförmigen Ferromagneten sind die Magnetkreise größer, wodurch der Verlust der Magnetkraftlinien sehr groß ist, so dass die Leistung des Motors reduziert wird.

Die EP 0 821464 beschreibt einen Rotor, der aus Glas oder Karbonfaser gebildet ist und in den in einer gedachten Innenschale magnetisierbares Material eingebettet ist.

Aus der EP 0 998 010 ist es bekannt, am Rotor einer Transversalflussmaschine einen Dämpferkäfig aus einem Material mit hoher elektrischer Leitfähigkeit und geringer magnetischer Leitfähigkeit anzuordnen, der die Permanentmagnete und Flussleitstücke zumindest teilweise umgibt. Der Dämpferkäfig ist durch Stege, welche in Richtung des Stators gesehen über den Permanentmagneten und zwischen den Flussleitstücken angeordnet sind, und durch Verbindungsstücke gebildet, welche die Stege miteinander verbinden. Bei der Transversalflussmaschine mit Flusskonzentration können die Permanentmagnete kleiner gestaltet werden. Die Flussleitstücke sind aus Eisen bzw. Eisenlegierungen oder Sinterteilen mit Eisen hergestellt. Die Flussleitstücke können auch aus laminierten Blechen aufgebaut sein.

Dokument EP 0 942 517 A2 beschreibt eine Transversalflussmaschine. Dabei sind über den Umfang des Rotors auf weichmagnetischen und voneinander magnetisch isolierten Rückschlussringen Permanentmagnete angeordnet. Über den Umfang des Stators sind weichmagnetische U-Joche und I-Joche angeordnet, wobei die U-Joche eine Ringwicklung aufnehmen. Die U-Joche sind geteilt, wobei die oder jede Teilungsebene mit der U-Jochebene einen spitzen bis rechten Winkel einschließt und die Einzelteile der U-Joche an ihren Berührungsflächen komplementäre formschlüssige Ausbildungen zur Verhinderung einer radialen und axialen Verschiebung der Einzelteile der U-Joche aufweisen.

Dokument US 2006/0186754 A1 beschreibt eine rotierende elektrische Maschine. Diese umfasst einen Ankerkem mit einer Ankerwicklung, einen Rotor der klauenpolförmige magnetische Polabschnitte und einen zylindrischen Abschnitt mit einer Feldwicklung aufweist, und einen Permanentmagnet der im magnetischen Kreis des Rotorkerns vorgesehen ist und einen magnetischen Fluss für den Ankerkem bereitstellt. Es ist ein magnetischer Kurzschlussmechanismus vorgesehen, um den magnetischen Fluss des Permanentmagneten durch eine von der Zentrifugalkraft verursachte Deformation kurzzuschließen.

Dokument CH 436 451 beschreibt einen polarisierten Läufer für elektrische Kleinstmotoren. Dieser Läufer besitzt eine Mehrzahl am Umfang eines Trägers angeordneter Dauermagneten, wobei der Träger aus einem Kunststoff und die Dauermagneten aus einem anisotropen Magnetwerkstoff mit zum Läufer radialer Vorzugsrichtung bestehen.

Dokument US 2006/0091752 A1 beschreibt einen elektrischen Motor, wobei ein Läufer einen Ständer umgibt und um diesen rotiert. Der Läufer weist eine Vielzahl von Permanentmagneten auf, von denen jeder in radialer Richtung beweglich ist, so dass eine durch die Rotation des Läufers erzeugte Zentrifugalkraft die Permanentmagneten radial nach außen bewegt.

Dokument WO 03/021763 A1 beschreibt einen Halbachfeld-Generator/Motor mit einer automatisch regulierten Ausgangsspannung und mechanischer Ausgangsleistung. Der Läufer weist ein Halbachfeld auf. Die Ständerwicklungen werden geschaltet oder kommutiert, um einen Gleichstrommotor/Generator bereitzustellen, der im Wesentlichen einem konventionellen Gleichstrommotor/Generator entspricht. Die Spannung und die Leistung werden automatisch reguliert, indem die Zentrifugalkraft verwendet wird, um den Durchmesser des Läufers zu verändem. Dadurch verändert sich der Luftspalt zwischen Ständer und dem rotierenden Halbachfeld in Abhängigkeit von der Winkelgeschwindigkeit.

Dokument US 2006/208602 A1 beschreibt einen Mehrphasen-Klauenpol-Motor. Der Motor umfasst einen Läufer und einen durch einen Luftspalt vom Läufer getrennten Ständer, wobei der Läufer einen Läufer-Eisenkern und eine Vielzahl magnetischer Pole, die durch auf den Eisenkern aufgebrachte Permanentmagnete gebildet werden, umfasst. Der Ständer umfasst Ständer-Eisenkerne und auf die Ständer-Eisenkerne gewickelte umlaufende Spulen. Die Ständer-Eisenkerne umfassen Klauenpole, die aus gepressten, magnetischen Pulver gebildet sind.

### Zugrundeliegendes Problem

Das Ziel ist, eine kompakt bauende und hocheffiziente elektrische Maschine bereit zu stellen, die eine hohe Leistungsdichte bei für die Serienfertigung optimiertem Aufbau erlaubt insbesondere für hohe Drehzahlen. Zudem sollen Magnetfeldkomponenten, die sich unerwünscht ausbilden und zur Kraftbildung nicht beitragen, reduziert werden.

### Lösung

Als Lösung wird eine permanenterregte elektrische Maschine vom Typ Transversalflussmaschine mit Klauenpolstator vorgeschlagen, wobei ein Ständer eine im Wesentlichen kreisringförmige Spulenanordnung aufweist, deren Mittelachse mit der Mittellängsachse eines Läufers im Wesentlichen übereinstimmt, und der Läufer mit Permanentmagnet-Elementen versehen ist. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Die Spulenanordnung weist wenigstens eine hohlzylindrische Wicklung auf, die in dem Ständer zumindest teilweise aufgenommen ist. Der Läufer hat auf vom Luftspalt abliegenden Seiten der Permanentmagnet-Elemente einen magnetischen Rückschluss, der aus in Umfangsrichtung des Läufers orientierten Ringen gebildet ist, die in Axialrichtung des Läufers nicht breiter sind als einzelne der Permanentmagnet-Elemente. In radialer Richtung auf der vom Luftspalt abliegenden Seite der Permanentmagnet-Elemente bzw. des magnetischen Rückschlusses sind rohrförmige Kurzschlusshülsen angeordnet. Alternativ können in Axialrichtung der elektrischen Maschine zwischen benachbarten Permanentmagnet-Elementen und/oder in Axialrichtung benachbarten magnetischen Rückschluss-Ringen elektrisch wirksame Kurzschluss-Spulen angeordnet sein.

Diese Kurzschluss-Spulen sind insbesondere bei hohen Drehzahlen gegen die Magnetfeldkomponente wirksam, die sich in axialer Richtung unerwünscht durch die Statorspule ausbildet, aber zur Kraftbildung nicht beiträgt. Diese axiale Komponente kann in der Läufertragkonstruktion Wirbelströme mit entsprechend hohen Verlusten bewirken. Diese Wirbelströme werden durch die Kurzschluss-Spulen verlustarm geführt, da in gut elektrisch leitendem Material, und schirmen die Läufertragkonstruktion vor Wirbelströmen wirksam ab.

In einer Alternative der permanenterregten elektrischen Maschine vom Typ Transversalflussmaschine mit Klauenpolstator hat ein Ständer eine im Wesentlichen kreisringförmige Spulenanordnung, deren Mittelachse mit der Mittellängsachse eines Läufers im Wesentlichen übereinstimmt. Der Läufer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Die Spulenanordnung weist wenigstens eine hohlzylindrische Wicklung auf, die im Ständer zumindest teilweise aufgenommen ist. Der Läufer hat eine magnetisch nicht wirksame Tragstruktur für die Permanentmagnet-Elemente, wobei die magnetisch nicht wirksame Tragstruktur aus mehreren zusammen zu fügenden Komponenten gebildet ist. Mit anderen Worten ist der Läufer frei von magnetischem Rückschlussmaterial. Vielmehr ist die magnetische Orientierung der Läufermagnete so modelliert, dass trotz fehlendem Weicheisenrückschluss sich im Luftspalt ein ausreichend hohes Permanenterregerfeld bildet. Durch den möglichen Entfall des Weicheisenrückschlusses wird die ungewollte, da nicht zur Kraftbildung beitragende Ausbildung des magnetischen Flusses in axialer Richtung vermieden.

Hierdurch wird eine maximale Ausnutzung des Volumens in der elektrischen Maschine mit sehr hoher Zuverlässigkeit im Betrieb bei geringen Herstellungskosten erreicht. Durch die verbesserte Raumausnutzung erhöht sich außerdem der Wirkungsgrad oder die Leistungsdichte der Maschine.

In einer Außenläuferkonfiguration der elektrischen Maschine hat der Ständer eine Spulenanordnung und der Läufer ist mit Permanentmagnet-Elementen versehen. Der Läufer kann dabei mit strukturellen Schwächungen versehen sein, so dass bei hohen Drehzahlen des Läufers eine Verformung des Läufers im Sinne einer Vergrößerung des Luftspalts eintritt. Zudem ist im Läufer ein magnetischer Rückschluss vorgesehen. Diese Maßnahme verursacht eine Schwächung des magnetischen Feldes, was bei hohen Drehzahlen wünschenswert sein kann.

Dazu können die Permanentmagnet-Elemente zumindest im Bereich der von dem Luftspalt abliegenden Seite der Permanentmagnet-Elemente an dem Läufer auf einer Lage aus einem Material aufgenommen sind, das so ausgewählt ist, dass sein Elastizitätsmodul eine Verformung bei hohen Drehzahlen des Läufers im Sinne einer Vergrößerung des Luftspaltes hervorruft.

Es ist auch möglich, den Läufer mit seine Verformbarkeit in radialer Richtung ermöglichenden strukturellen Schwächungen versehen ist, so dass eine Verformung des Läufers bei hohen Drehzahlen des Läufers im Sinne einer Vergrößerung des Luftspaltes eintritt.

Eine permanenterregte elektrische Maschine vom Typ Transversalflussmaschine mit Klauenpolstator kann einen Ständer und einen Läufer haben, wobei der Ständer eine im Wesentlichen kreisringförmige Spulenanordnung aufweist, deren Mittelachse mit der Mittellängsachse der Transversalflussmaschine im Wesentlichen übereinstimmt und der Läufer mit Permanentmagnet-Elementen versehen ist. Zwischen dem Ständer und dem Läufer ist ein Luftspalt gebildet, der von den Permanentmagnet-Elementen und mit auf diese in bestimmten Positionen ausgerichteten magnetisch leitenden Zähne des Ständers begrenzt ist. Die Spulenanordnung hat wenigstens eine hohlzylindrische Wicklung, die in dem Ständer zumindest teilweise aufgenommen ist. Der Läufer ist eisenlos, wobei durch entsprechend orientierte Permanentmagnet-Elemente ein magnetischer Rückschluss gebildet ist, und die Permanentmagnet-Elemente axiale Magnetflüsse parallel zur Mittellängsachse wirksam minimieren. Damit ist ein eisenloser Rotor geschaffen, bei dem axiale Magnetflüsse (parallel zur Mittellängsachse) im Rotor wirksam minimiert oder eliminiert sind. Als Folge hiervon entfallen auch parasitäre Verluste aufgrund von induzierten Wirbelströmen.

Die Orientierungsrichtung der magnetischen Achse kann bei allen Varianten so gewählt sein, dass sie mit der radialen Richtung einen Winkel zwischen etwa **20°** und 80° einschließt, dessen Vertex auf der Mittellinie des Permanentmagnet-Elemente liegt.

### Kurzbeschreibung der Zeichnungen

Weitere Merkmale, Eigenschaften, Vorteile und mögliche Abwandlungen werden für einen Fachmann anhand der nachstehenden Beschreibung verdeutlicht, in der auf die beigefügten Zeichnung Bezug genommen ist

In Fig. 1a ist eine seitliche schematische Ansicht eines Längsschnittes durch eine Ausführungsform einer permanent erregten elektrischen Maschine vom Typ Transversalflussmaschine veranschaulicht.

In Fig. 1b ist eine schematische Ansicht einer Kurzchlusswicklung für die permanent erregte elektrische Maschine vom Typ Transversalflussmaschine aus Fig. 1a veranschaulicht

In Fig. 2a ist eine stimseitige schematische Ansicht eines Querschnittes durch eine permanent erregte elektrische Maschine vom Typ Transversalflussmashine mit zwei unterschiedlichen Konfigurationen von Permanentmagnet-Elemente veranschaulicht.

In Fig. 2b ist eine seitliche schematische Draufsicht auf einen Haltesteg eines Läufers einer permanent erregten elektrischen Maschine aus Fig. 2a veranschaulicht.

In den Fig. 3a und 3b sind Läufer - Varianten einer Außenläufermaschine vom Typ Transversalflussmaschine veranschaulicht, die sich bei hohen Drehzahlen des läufers in radialer Richtung im Sinne einer Vergrößerung des Luftspaltes verformen.

### Detaillierte Beschreibung der Zeichnungen

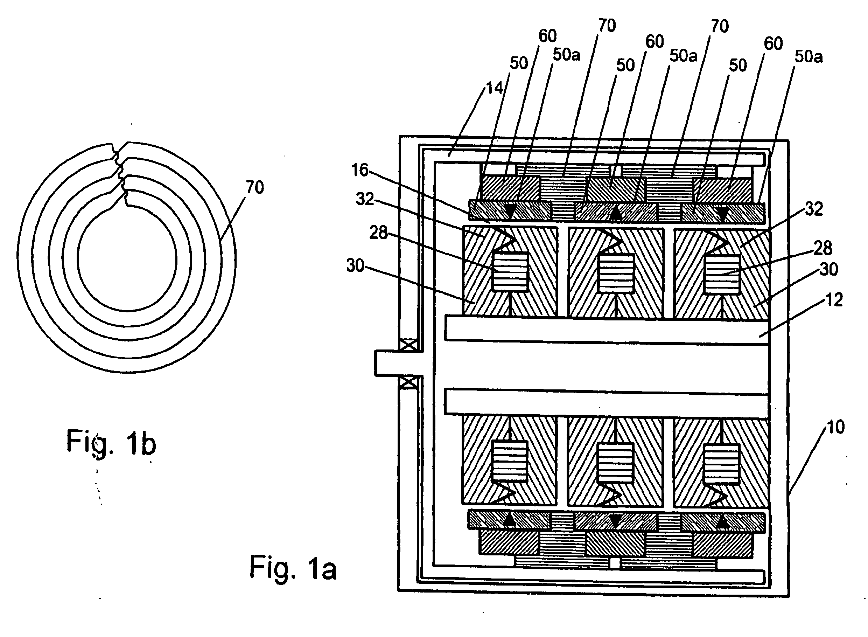

In Fig. 1 ist ein Längsschnitt durch eine Ausführungsform einer permanent erregten elektrischen Maschine 10 vom Typ Transversalflussmaschine mit Klauenpolstator, in der Ausgestaltung als Außenläufermaschine gezeigt. Das veranschaulichte und nachstehend erläuterte Konzept ist jedoch auch für eine Innenläufermaschine einsetzbar. Die elektrische Maschine 10 hat einen Ständer 12 und einen Läufer 14. Zwischen dem Läufer 14 und dem Ständer 12 ist ein Luftspalt 16 gebildet. Der Ständer 12 ist - durch den Luftspalt 16 getrennt - von dem topfförmigen Läufer 14 umgeben, der an seiner einen Stirnfläche eine nicht weiter veranschaulichte Abtriebswelle hat. Die Lagerung des läufers mittels geeigneter Kugel- oder Rollenlager ist ebenfalls nur schematisch weiter veranschaulicht.

Der Ständer 12 hat eine im Wesentlichen kreisringrylindrische Spulenanordnung 28 mit zwei hohlzylindrischen Wicklungen, die koaxial zur gemeinsamen Mittellängsachse M des Ständers und des Läufers der der Transversalflussmaschine 10 mit Klauenpolstator angeordnet ist. Jede der hohlzylindrischen Wicklungen ist aus im Querschnitt im Wesentlichen rechteckigem Bandmaterial gewickelt und in dem Ständer 12 aufgenommen.

Der Ständer 12 ist in der vorliegenden Ausführungsform mehrteilig aufgebaut, kann aber auch einstückig gestaltet sein. Dazu ist die/jede Wicklung der Spulenanordnung 28 von Schalenteilen 30 eingefasst, die als Magnetfluss-Joch 30 wirken und in einer längs der Mittellängsachse M der Spulenanordnung gelegten Schnittansicht etwa C-förmig gestaltet sind. Jedes Magnetfluss-Joch 30 hat an seiner dem Läufer zugewandten Flanke eine Vielzahl von Zähnen 32, die parallel zur Mittellängsachse M orientiert sind. Jeweils zwei Magnetfluss-Joche 30 umgreifen eine Wicklung von deren jeweiligen Stirnflächen her. Damit sind die Zähne 32 der Magnetfluss-Joche 30 bei einer Innenläufer-Maschine an der innenliegenden Mantelfläche der hohlzylindrischen Wicklungen angeordnet und bei einer Außenläufer-Maschine an der außen liegenden Mantelfläche der "hohlzylindrischen Wicklungen. Die ansonsten im Wesentlichen gegengleichen, einer jeweiligen Wicklung zugeordneten Magnetfluss-Joche 30 sind mit ihren jeweiligen Zähnen 32 um eine halbe Zahnteilung versetzt ineinander greifend angeordnet.

Von den Zähnen 32 um den Luftspalt 16 in radialer Richtung beabstandet, sind an dem Läufer 14 Permanentmagnet-Elemente 50 angeordnet, deren magnetische Orientierung zu dem Luftspalt 16 hin jeweils abwechselnd ist. Dies ist durch die abwechselnden Polungen mit den radial nach innen bzw. radial nach außen zeigenden Dreiecken veranschaulicht. In bestimmten Positionen des Läufers 14 relativ zum Ständer 12 fluchten die Permanentmagnet-Elemente 50 einer axialen Reihe des Läufers 14 mit Zähnen 32 einer axialen Reihe des Ständers 12. Die Permanentmagnet-Elemente des Läufers können als Guss- oder Schnitt-Teile aus einer AlNi- oder AlNiCo-Legierung, aus Barium- oder Strontiumferrit, aus einer SmCo-, oder NdFeB-Legierung gebildet sein. Zur Verbesserung der mechanischen Stabilität können die Permanentmagneten auch als Pulverteilchen eingebettet in temperaturbeständige Kunststoffbinder enthaltend zum Beispiel Polyamid, Polyphensulfid, Duroplast, Epoxidharz, oder dergl. gebildet sein. Es kann sich bei dem temperaturbeständigen Kunststoffbinder auch um Methacrylatklebstoff, Epoxidharzkleber, Polyurethanklebstoff, Phenolharzklebstoff, Epoxydharz mit Faserverstärkung, oder hydrophobiertes Epoxydharzgießharz handeln.

Die Permanentmagnet-Elemente 50 können eine Gestalt aufweisen, die im Wesentlichen mit der Gestalt der Zähne 32 übereinstimmt; sie können also rechteckig, trapez- oder dreieck-, bzw. rautenförmig, oder dergl. sein. Die Permanentmagnet-Elemente 50 können in Richtung der Mittellängsachse nur etwa halb so lang wie die mit ihnen fluchtenden Zähne 32. In Richtung der Mittellängsachse zueinander benachbarte Permanentmagnet-Elemente 50 haben ebenfalls eine unterschiedliche magnetische Orientierung. Hieraus resultiert eine schachbrettartig sich abwechselnde Anordnung von gegensinnig orientierten Permanentmagnet-Elementen 50.

Der Läufer 14 hat auf von dem Luftspalt 16 abliegenden Seiten 50a der Permanentmagnet-Elemente 50 einen magnetischen Rückschluss 60, der aus in Umfangsrichtung des Läufers 14 orientierten Ringen aus magnetisch leitendem Material, zum Beispiel Weicheisen gebildet ist. In Axialrichtung des Läufers 14 sind die Ringe schmäler, aber auf jeden Fall nicht breiter als einzelne der Permanentmagnet-Elemente 50, welche die Ringe umgeben.

Zwischen in Axialrichtung der elektrischen Maschine 10 benachbarten Permanentmagnet-Elementen 50 und in Axialrichtung benachbarten magnetischen Rückschluss-Ringen 60 sind elektrisch/magnetisch wirksame Kurzschluss-Spulen 70 - siehe Fig. 1b - aus elektrisch leitendem Bandmaterial, zum Beispiel aus Kupfer oder Aluminium angeordnet.

Anstelle gewickelter Kurzschluss-Spulen können auch in radialer Richtung auf der vom Luftspalt 16 abliegenden Seite der Permanentmagnet-Elemente 50 bzw. des magnetischen Rückschlusses 60 rohrförmige Kurzschlusshülsen angeordnet sein. Anstelle mehrerer rohrförmiger Kurzschlusshülsen bei jedem der Permanentmagnet-Elemente 50 bzw. magnetischen Rückschlüssen 60 kann auch eine durchgehende rohrförmige Kurzschlusshülse vorgesehen sein. Diese durchgehende rohrförmige Kurzschlusshülse kann auch teilweise oder komplett die Rotorträgerfunktion übernehmen.

Die Kurzschluss-Spulen 70 überragen in der gezeigten Variante die magnetischen Rückschluss-Ringe 60 in radialer Richtung und stützen sich an der Innenwand des Läufers ab.

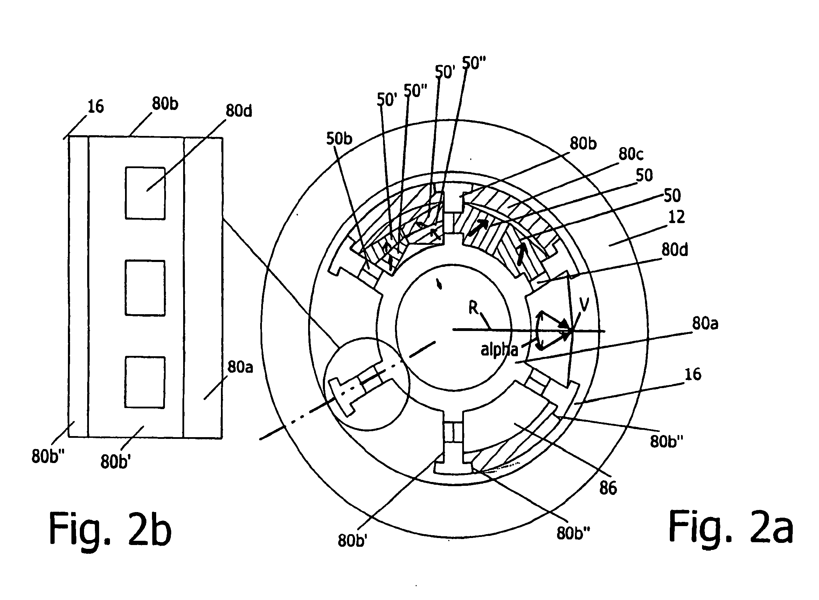

Als Variante zu Fig. 1a, 1b ist in Fig. 2 eine permanenterregte elektrische Maschine 10 vom Typ Transversalflussmaschine mit Klauenpolstator mit einem vergleichbar gestalteten und daher nur schematisch veranschaulichten Ständer 12 und einem Läufer 14 als Innenläuferausführung gezeigt. In ihrer Wirkung, Struktur und/oder Funktion im Vergleich zu Fig. 1a, 1b übereinstimmende Komponenten sind mit übereinstimmenden Bezugszeichen versehen und nicht noch einmal extra erläutert.

Auch bei dieser Variante der permanenterregten elektrischen Maschine vom Typ Transversalflussmaschine hat der Ständer eine Spulenanordnung und der Läufer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Der Läufer hat eine mehrteilige magnetisch nicht wirksame Tragstruktur 80a, 80b, 80c für die Permanentmagnet-Elemente 50 und die Permanentmagnet-Elemente 50. Die Tragstruktur hat ein Trägerrohr 80a, an dessen Außenumfang radial abstehende, gleichmäßig entlang des Umfangs verteilte Haltestege 80b angeformt sind. Die Haltestege 80b haben eine in der stirnseitigen Draufsicht (siehe Fig. 2a) im Wesentlichen T-förmige Gestalt, wobei in ihrem radial orientierten Stegabschnitt 80b' rechteckig gestaltete Aussparungen 80d eingearbeitet sind (siehe Fig. 2b), in die entsprechend geformte Zapfen 50b der Permanentmagnet-Elemente 50 eingreifen.

Die in den Permanentmagnet-Elementen 50 eingezeichneten Pfeile deuten die Magnetorientierung an. Die Haltestege 80b haben an ihrem dem Luftspalt 16 zugewandten freien Ende in tangentialer Richtung orientierte Haltevorsprünge 80b". Jeweils zwei einander zugewandte Haltevorsprünge 80b" benachbarter Haltestege 80b nehmen eine gekrümmte Halteplatte 80c mit entsprechend geformten Kantenbereichen auf. Das Trägerrohr 80a und jeweils zwei, an dessen Außenumfang radial abstehende Haltestege 80b bilden zusammen mit der gekrümmten Halteplatte 80c einen Aufnahmeraum 86 für die Permanentmagnet-Elemente 50. Der Läufer bzw. die Tragstruktur sind dabei aus magnetisch nicht oder nahezu nicht wirksamem Material gebildet. Damit hat der Läufer keinen magnetischen Rückschluss. Anstelle der gekrümmten Halteplatte 80c können die in tangentialer Richtung orientierten Haltevorsprünge 80b" so weit vorspringen, dass sie die Haltefunktion für die Permanentmagnet-Elemente 50 allein übernehmen können.

Bei der in Fig. 2a gezeigten Variante sind als "Untervariante" auf der linken Seite die Permanentmagnet-Elemente 50 als in radialer Richtung geteilte Elemente 50', 50" ausgestaltet, während auf der rechten Seite die Permanentmagnet-Elemente 50 in radialer Richtung ungeteilt, also einstückig sind. Diese Teilung der Permanentmagnet-Elemente 50 erlaubt eine besonders vorteilhafte Führung des Magnetflusses und resultiert somit auch in einem minimalen Streufluss. Es versteht sich, dass in einer elektrischen Maschine alle Permanentmagnet-Elemente 50 in gleicher Weise gestaltet, also entweder geteilt oder ungeteilt sind. Anstelle der mehrteiligen Permanentmagnet-Elemente 50 kann auch ein monolithischer Magnetformkörper verwendet werden, dem die sich in seinem Volumen ändernde magnetische Orientierung durch entsprechende Aufmagnetisierung aufgeprägt wurde.

Die dem Luftspalt zugewandten Halteelemente 80b 80c können auch magnetisch leitend ausgeführt sein, zum Beispiel aus Weicheisen.

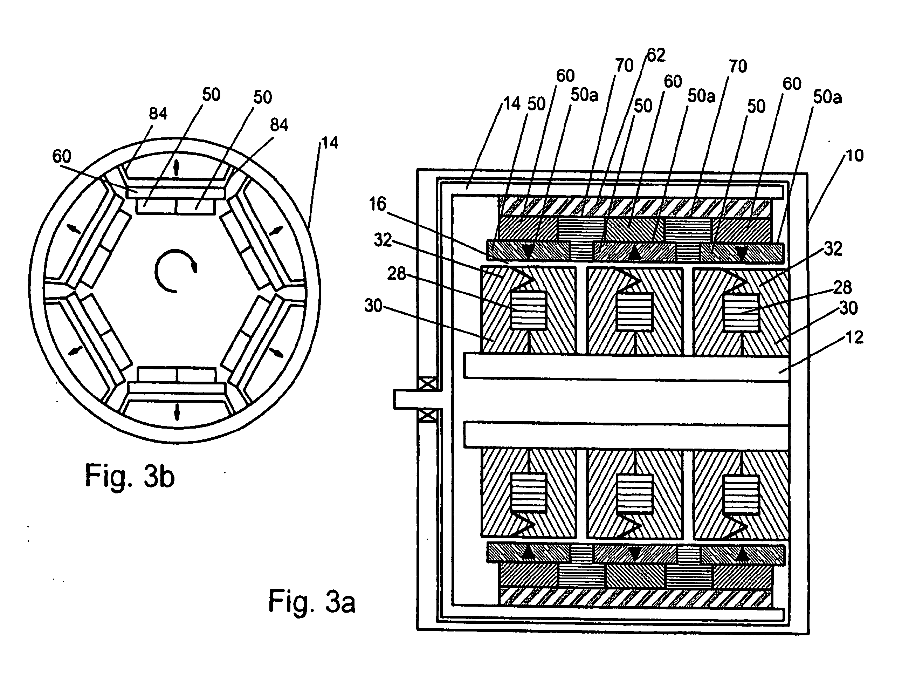

In Fig. 3a ist ein Läufer 14 einer Außenläufermaschine vom Typ Transversalflussmaschine veranschaulicht, wobei der die Permanentmagnet-Elemente 50 tragende Läufer 14 sich in radialer Richtung bei hohen Drehzahlen des Läufers 14 im Sinne einer Vergrößerung des Luftspaltes 16 verformt. Dazu sind die Permanentmagnet-Elemente 50 über einen elastisch verformbaren Materialstreifen, zum Beispiel Gummi oder dergl. an dem Läufer 14 befestigt. Das Material ist so ausgewählt, dass abhängig von seiner Gestalt und/oder seines Elastizitätsmoduls eine Verformung bei hohen Drehzahlen des Läufers 16 im Sinne einer Vergrößerung des Luftspaltes 16 entsteht. In Fig. 3b ist gezeigt, wie zusätzlich oder anstelle davon der Läufer 14 einer Außenläufermaschine vom Typ Transversalflussmaschine mit seine Ver formbarkeit in radialer Richtung ermöglichenden strukturellen Schwächungen 84 versehen ist, so dass eine Verformung des Läufers bei hohen Drehzahlen des Läufers 16 im Sinne einer Vergrößerung des Luftspaltes 16 - in Richtung der radialen Pfeile in Fig. 3b - eintritt. Die Orientierungsrichtung der magnetischen Achse ist bei allen gezeigten Varianten so gewählt, dass sie mit der radialen Richtung einen Winkel zwischen etwa 20° und 80° einschließt, dessen Vertex V in der Mitte des Permanentmagnet-Elementes 50 liegt.

Die in den Fig. gezeigten Verhältnisse der einzelnen Teile und Abschnitte der Transversalflussmaschine mit Klauenpolstator hiervon zueinander und deren Abmessungen und Proportionen sind nicht einschränkend zu verstehen. Vielmehr können einzelne Abmessungen und Proportionen auch von den gezeigten abweichen. Im Übrigen sind auch einzelne Aspekte der unterschiedlichen Varianten der Transversalflussmaschine miteinander kombinierbar, ohne hier im Detail veranschaulicht zu sein.

## Patentansprüche

1. Permanenterregte elektrische Maschine vom Typ Transversalflussmaschine mit Klauenpolstator (10), mit einem Ständer (12) und einem Läufer (14), wobei
- der Ständer (12) eine im wesentlichen kreisringförmige Spulenanordnung (28) aufweist, deren Mittelachse mit der Mittellängsachse (M) der Transversalflussmaschine im wesentlichen übereinstimmt, und der Läufer (14) mit Permanentmagnet-Elementen (50) versehen ist,
- zwischen dem Ständer (12) und dem Läufer (14) ein Luftspalt (16) gebildet ist, der von den Permanentmagnet-Elementen (50) und mit auf diese in bestimmten Positionen ausgerichteten magnetisch leitenden Zähnen (32) des Ständers (12) begrenzt ist, wobei
- die Spulenanordnung (28) wenigstens eine hohlzylindrische Wicklung aufweist, die in dem Ständer (12) zumindest teilweise aufgenommen ist, und
- im Läufer (14) ein magnetischer Rückschluss vorgesehen ist,
**dadurch gekennzeichnet, dass**
- der Läufer (14) eisenlos ist und der magnetische Rückschluss durch entsprechend orientierte Permanentmagnet-Elemente gebildet ist, die axiale Magnetflüsse parallel zur Mittellängsachse (M) wirksam minimieren.

2. Permanenterregte elektrische Maschine (10) nach Anspruch 1, wobei die Orientierungsrichtung der magnetischen Achse so gewählt ist, dass sie mit der radialen Richtung R einen Winkel (alpha) zwischen etwa 20° und 80° einschließt, dessen Vertex (V) auf der Mittellinie des Permanentmagnet-Elemente (50) liegt.

3. Permanenterregte elektrische Maschine (10) vom Typ Transversalflussmaschine mit Klauenpolstator, mit einem Ständer (12) und einem Läufer (14), wobei
- der Ständer (12) eine im wesentlichen kreisringförmige Spulenanordnung (28) aufweist, deren Mittelachse mit der Mittellängsachse des Läufers im wesentlichen übereinstimmt, und der Läufer mit Permanentmagnet-Elementen (50) versehen ist,
- zwischen dem Ständer (12) und dem Läufer (14) ein Luftspalt (16) gebildet ist, der von den Permanentmagnet-Elementen (50) und mit auf diese in bestimmten Positionen ausgerichteten magnetisch leitenden Zähnen (32) des Ständers (12) begrenzt ist, wobei
- die Spulenanordnung (28) wenigstens eine hohlzylindrische Wicklung aufweist, die in dem Ständer (12) zumindest teilweise aufgenommen ist, **dadurch gekennzeichnet, dass**
- der Läufer (14) auf von dem Luftspalt (16) abliegenden Seiten (50a) der Permanentmagnet-Elemente (50) einen magnetischen Rückschluss (60) hat, der aus in Umfangsrichtung des Läufers (14) orientierten Ringen gebildet ist, die in Axialrichtung des Läufers (14) nicht breiter sind als einzelne der Permanentmagnet-Elemente (50), und
- in radialer Richtung auf der vom Luftspalt (16) abliegenden Seite der Permanentmagnet-Elemente (50) bzw. des magnetischen Rückschlusses (60) rohrförmige Kurzschlusshülsen, oder zwischen in Axialrichtung der elektrischen Maschine (10) benachbarten Permanentmagnet-Elementen (50) und/oder in Axialrichtung benachbarten magnetischen Rückschluss-Ringen (60) elektrisch wirksame Kurzschluss-Spulen (70) angeordnet sind.

4. Permanenterregte elektrische Maschine (10) nach Anspruch 3, bei der die Kurzschluss-Spulen (70) aus Kupfer, Aluminium, oder dergl. enthaltendem, gut elektrisch leitendem Bandmaterial gebildet sind.

5. Permanenterregte elektrische Maschine (10) nach Anspruch 3 oder 4, bei der die Kurzschluss-Spulen (70) die magnetischen Rückschluss-Ringe (60) in radialer Richtung überragen.

6. Permanenterregte elektrische Maschine (10) vom Typ Transversalflussmaschine mit Klauenpolstator, mit einem Ständer (12) und einem Läufer (14), wobei
- der Ständer (12) eine im wesentlichen kreisringförmige Spulenanordnung (28) aufweist, deren Mittelachse mit der Mittellängsachse des Läufers im wesentlichen übereinstimmt, und der Läufer mit Permanentmagnet-Elementen (50) versehen ist,
- zwischen dem Ständer (12) und dem Läufer (14) ein Luftspalt (16) gebildet ist, der von den Permanentmagnet-Elementen (50) und mit auf diese in bestimmten Positionen ausgerichteten magnetisch leitenden Zähnen (32) des Ständers (12) begrenzt ist, wobei
- die Spulenanordnung (28) wenigstens eine hohlzylindrische Wicklung aufweist, die in dem Ständer (12) zumindest teilweise aufgenommen ist,
**dadurch gekennzeichnet, dass**
- der Läufer (14) eine magnetisch nicht wirksame Tragstruktur (80a, ... 80c) für die Permanentmagnet-Elemente (50) aufweist, wobei die magnetisch nicht wirksame Tragstruktur aus mehreren zusammen zu fügenden Komponenten (80a, ... 80c) gebildet ist.

7. Permanenterregte elektrische Maschine (10) nach Anspruch 6, bei der die magnetisch nicht wirksame Tragstruktur (80a, ... 80c) zumindest teilweise aus Kupfer, Aluminium, Titan, oder dergl. enthaltendem, elektrisch leitendem Bandmaterial gebildet ist.

8. Permanenterregte elektrische Maschine (10) nach Ansprüche 6 oder 7, bei der die magnetisch nicht wirksame Tragstruktur (80a, ... 80c) zumindest teilweise aus einem elektrischen Isolator, wie Kunststoff oder dergl. gebildet ist.

9. Permanenterregte elektrische Maschine (10) nach einem der vorhergehenden Ansprüche, bei der die Permanentmagnet-Elemente (50) als Bauteile geformt sind, die gesinterte oder in Kunststoff gebundene Permanentmagnet-Partikel aufweisen.

10. Permanenterregte elektrische Maschine (10) nach einem der vorhergehenden Ansprüche, in einer Außenläuferkonfiguration, wobei
- der Läufer (14) mit strukturellen Schwächungen (84) versehen ist, so dass bei hohen Drehzahlen des Läufers eine Verformung des Läufers im Sinne einer Vergrößerung des Luftspaltes (16) eintritt.

## Claims

1. A permanently-excited electrical machine (10) of the transversal flow machine type comprising a claw-pole stator, with a stator (12) and a rotor (14), wherein
- the stator (12) comprises an essentially annular coil arrangement (28) whose centre axis essentially coincides with the longitudinal centre axis (M) of the transversal flow machine, and wherein the rotor (14) is provided with permanent magnet elements (50),
- an air gap (16) is formed between the stator (12) and the rotor (14), which is defined by the permanent magnet elements (50) and by magnetically conductive teeth (32) of the stator (12), which in certain positions are aligned with these, wherein
- the coil arrangement (28) comprises at least one hollow cylindrical winding which is at least partially accommodated in stator (12), and
- a magnetic return is provided in the rotor (14),
**characterized in that**
- the rotor (14) is ironless and the magnetic return is formed by correspondingly oriented permanent magnet elements, and the permanent magnet elements effectively minimise axial magnetic fluxes parallel to the longitudinal centre axis (M).

2. The permanently-excited electrical machine (10) according to Claim 1, wherein the direction of orientation of the magnetic axis is selected in such a manner that it includes an angle (alpha) between approx. 20° and 80° with the radial direction R, whose vertex (V) lies on the centre line of the permanent magnet elements (50).

3. A permanently-excited electrical machine (10) of the transversal flow machine type comprising a claw-pole stator, with a stator (12) and a rotor (14), wherein
- the stator (12) comprises an essentially annular coil arrangement (28) whose centre axis essentially coincides with the longitudinal centre axis of the rotor, and wherein the rotor (14) is provided with permanent magnet elements (50),
- an air gap (16) is formed between the stator (12) and the rotor (14), which is defined by the permanent magnet elements (50) and by magnetically conductive teeth (32) of the stator (12), which in certain positions are aligned with these, wherein
- the coil arrangement (28) comprises at least one hollow cylindrical winding which is at least partially accommodated in stator (12),
**characterized in that**
- the rotor (14) has a magnetic return (60) on the sides (50a) of the permanent magnet elements (50) which are remote from the air gap (16), and is formed by rings oriented in the circumferential direction of the rotor (14) and which, in the axial direction of the rotor (14) are not wider than individual ones of the permanent magnet elements (50), and
- tubular short-circuit sleeves may be arranged in the radial direction on the side of the permanent magnet elements (50) or of the magnetic return (60), respectively, which is remote from the air gap (16), or between neighbouring permanent magnet elements (50) in the axial direction of the electrical machine (10), and/or neighbouring magnetic return rings (60) in the radial direction are arranged between electrically/magnetically effective short-circuit coils (70).

4. The permanently-excited electrical machine (10) according to Claim 3, wherein the short-circuit coils (70) are made of ribbon material of good electrical conductivity containing copper, aluminium or the like.

5. The permanently-excited electrical machine (10) according to Claim 3 or 4, wherein the short-circuit coils (70) project beyond the magnetic return rings (60) in the radial direction.

6. A permanently-excited electrical machine (10) of the transversal flow machine type comprising a claw-pole stator, with a stator (12) and a rotor (14), wherein
- the stator (12) comprises an essentially annular coil arrangement (28) whose centre axis essentially coincides with the longitudinal centre axis of the rotor, and wherein the rotor (14) is provided with permanent magnet elements (50),
- an air gap (16) is formed between the stator (12) and the rotor (14), which is defined by the permanent magnet elements (50) and by magnetically conductive teeth (32) of the stator (12), which in certain positions are aligned with these, wherein
- the coil arrangement (28) comprises at least one hollow cylindrical winding which is at least partially accommodated in stator (12),
**characterized in that**
- the rotor (14) comprises a magnetically non-effective support structure (80a, ... 80c) for the permanent magnet elements (50) and the permanent magnet elements (50), wherein the magnetically non-effective support structure is formed from several components (80a, ... 80c) to be fitted together.

7. The permanently-excited electrical machine (10) according to Claim 6, wherein the magnetically non-effective support structure (80a, ... 80c) is formed at least partially from an electrically conductive ribbon material which contains copper, aluminium, titanium, or the like.

8. The permanently-excited electrical machine (10) according to Claims 6 or 7, wherein the magnetically non-effective support structure (80a, ... 80c) is formed at least partially from an electrical insulator such as plastic material or the like.

9. The permanently-excited electrical machine (10) according to one of the previous claims, wherein the permanent magnet elements (50) are formed as components which comprise sintered or plastic-bonded permanent magnet particles.

10. A permanently-excited electrical machine (10) according to one of the previous claims, in an external rotor configuration, wherein
- the rotor (14) is provided with structural weak points (84), so that a deformation of the rotor occurs at high speeds of the rotor in the sense of an increase of the air gap (16).

## Revendications

1. Machine électrique à excitation permanente (10) du type machine à flux transversal pourvue d'un stator à griffes polaires, comprenant un stator (12) et un rotor (14),
- le stator (12) présentant un ensemble bobine (28) pour l'essentiel de forme annulaire dont l'axe médian coïncide pour l'essentiel avec l'axe longitudinal médian (M) de la machine à flux transversal, et le rotor (14) étant pourvu d'éléments magnétiques permanents (50),
- un entrefer (16) étant formé entre le stator (12) et le rotor (14), lequel entrefer est délimité par lesdits éléments magnétiques permanents (50) et par des dents (32) du stator (12) magnétiquement conductrices orientées vers les éléments dans des positions déterminées,
- l'ensemble bobine (28) présentant au moins un enroulement cylindrique creux, logé au moins partiellement dans le stator (12), et
- un bouclage magnétique étant prévu dans le rotor (14)
**caractérisé en ce que**
- le rotor (14) est exempt de fer et ledit bouclage magnétique est formé par des éléments magnétiques permanents orientés en conséquence, qui réduisent de manière efficace des flux magnétiques axiaux parallèlement à l'axe médian longitudinal (M).

2. Machine électrique à excitation permanente (10) selon la revendication 1, la direction d'orientation de l'axe magnétique étant choisie de telle sorte qu'elle forme avec la direction radiale R un angle (alpha) compris entre environ 20 et 80°, dont le vertex (V) est situé sur la ligne médiane des éléments magnétiques permanents (50).

3. Machine électrique à excitation permanente (10) du type machine à flux transversal pourvue d'un stator à griffes polaires, comprenant un stator (12) et un rotor (14),
- le stator (12) présentant un ensemble bobine (28) pour l'essentiel de forme annulaire dont l'axe médian coïncide pour l'essentiel avec l'axe longitudinal médian de la machine à flux transversal, et le rotor (14) étant pourvu d'éléments magnétiques permanents (50),
- un entrefer (16) étant formé entre le stator (12) et le rotor (14), lequel entrefer est délimité par les éléments magnétiques permanents (50) et par des dents (32) du stator (12) magnétiquement conductrices orientées vers lesdits éléments dans des positions déterminées,
- l'ensemble bobine (28) présentant au moins un enroulement cylindrique creux, logé au moins partiellement dans le stator (12),
**caractérisé en ce que**
- le rotor (14) possède sur des faces (50a) des éléments magnétiques permanents opposées à l'entrefer (16) un bouclage magnétique (60) qui est constitué de bagues orientées dans la direction circonférentielle du rotor (14), lesquelles bagues ne sont pas plus larges que chacun des éléments magnétiques permanents (50) dans la direction axiale du rotor (14), et
- des douilles en court-circuit tubulaires sont placées dans la direction radiale sur la face des éléments magnétiques permanents (50) ou du bouclage magnétique opposée à l'entrefer (16), ou des bobines en court-circuit (70) électriquement efficaces sont placées entre des éléments magnétiques permanents (50) adjacents dans la direction axiale de la machine électrique (10) et/ou des bagues de bouclage magnétique (60) adjacentes dans la direction axiale.

4. Machine électrique à excitation permanente (10) selon la revendication 3, dans le cadre de laquelle les bobines en court-circuit (70) sont formées à partir de cuivre, d'aluminium ou d'un feuillard électriquement conducteur de composition similaire.

5. Machine électrique à excitation permanente (10) selon les revendications 3 ou 4, dans le cadre de laquelle les bobines en court-circuit (70) dépassent les bagues de bouclage magnétique (60) dans la direction radiale.

6. Machine électrique à excitation permanente (10) du type machine à flux transversal pourvue d'un stator à griffes polaires, comprenant un stator (12) et un rotor (14),
- le stator (12) présentant un ensemble bobine (28) pour l'essentiel de forme annulaire dont l'axe médian coïncide pour l'essentiel avec l'axe longitudinal médian du rotor, et le rotor (14) étant pourvu d'éléments magnétiques permanents (50),
- un entrefer (16) étant formé entre le stator (12) et le rotor (14), lequel entrefer est délimité par les éléments magnétiques permanents (50) et par des dents (32) du stator (12) magnétiquement conductrices orientées vers lesdits éléments dans des positions déterminées,
- l'ensemble bobine (28) présentant au moins un enroulement cylindrique creux, logé au moins partiellement dans le stator (12),
**caractérisé en ce que**
- le rotor (14) présente une structure porteuse magnétiquement non efficace (80a, ... 80c) pour les éléments magnétiques permanents (50), ladite structure porteuse magnétiquement non efficace étant formée à partir de plusieurs composants à assembler (80a, .... 80c).

7. Machine électrique à excitation permanente (10) selon la revendication 6, dans le cadre de laquelle la structure porteuse magnétiquement non efficace (80a, ... 80c) est formée au moins pour partie à partir de cuivre, d'aluminium, de titane ou d'un feuillard électriquement conducteur de composition similaire.

8. Machine électrique à excitation permanente (10) selon les revendications 6 ou 7, dans le cadre de laquelle la structure porteuse magnétiquement non efficace (80a, ... 80c) est formée au moins pour partie à partir d'une matière électriquement isolante telle que la matière synthétique ou une matière similaire.

9. Machine électrique à excitation permanente (10) selon l'une des revendications précédentes, dans le cadre de laquelle les éléments magnétiques permanents (50) sont formés sous forme de pièces présentant des particules magnétiques permanentes frittées ou liées avec de la matière synthétique.

10. Machine électrique à excitation permanente selon l'une des revendications précédentes, dans une configuration à rotor extérieur,
- le rotor (14) étant pourvu d'affaiblissements structurels (84) si bien qu'à des régimes élevés du rotor, il se produit une déformation du rotor allant dans la direction d'un agrandissement de l'entrefer (16).
